# EUROPÄISCHE PATENTANMELDUNG

(11) **EP 4 538 556 A1**
(43) Veröffentlichungstag der Anmeldung: **16.04.2025**
(21) Anmeldenummer: 24020305.9
(22) Anmeldetag: 09.10.2024
(51) Int. Cl.: F16D 65/00, F16L 11/00

(54) **VORRICHTUNG ZUM ABSAUGEN VON BREMSSTAUB UND EIN KRAFTFAHRZEUG MIT DIESER VORRICHTUNG**

(30) Priorität: 10.10.2023 CZ 20230382
(71) Anmelder: Skoda Auto a.s., 29301 Mladá Boleslav (CZ)
(72) Erfinder: Hrdlicka, Martin, 29301 Mlada Boleslav (CZ); Jaros, Karel, 62300 Brno (CZ); Klofec, Michal, 47201 Doksy (CZ); Kozub, Vratislav, 29301 Mlada Boleslav (CZ)

(57) **Zusammenfassung**

Vorrichtung zum Absaugen von Bremsstaub von einer Bremse eines Kraftfahrzeugs umfassend einen Schlauch (1) und einen Filter (2), wobei der Schlauch (1) mit dem Filter (2) verbunden ist und ein erstes Ende mit einer Einlassöffnung zum Einlassen von Bremsstaub in den Schlauch (1) und ein zweites Ende mit einer Auslassöffnung zum Auslassen von Bremsstaub in den Filter (2) aufweist. Der Schlauch (1) umfasst ferner mindestens ein magnetisches Element (3), das an der Oberfläche des Schlauchs (1) angebracht ist, um ferromagnetische Staubpartikel aufzufangen. Ferner ein Kraftfahrzeug, das eine Karosserie mit einem Fahrgestell, Räder (8), Bremsen (9) zum Abbremsen der Räder (8) und eine Vorrichtung zum Absaugen von Bremsstaub umfasst, wobei die Einlassöffnung des Schlauchs (1) auf ein Reibelement einer der Bremsen (9) ausgerichtet ist.

## Beschreibung

### Technisches Sachgebiet

Die vorliegende Erfindung betrifft das Auffangen von Bremsstaub, z. B. bei Personenkraftwagen, mit Hilfe einer Absaugvorrichtung, die den beim Bremsen freigesetzten Staub durch einen Schlauch zu einem Filter-/Fangelement leitet.

### Stand der Technik

Im Stand der Technik sind Vorrichtungen zum Einbau in einen Personenkraftwagen bekannt, die den beim Bremsen von der Bremse freigesetzten Staub ansaugen und diesen Staub mit einem Filter auffangen. Die Bremsen von Kraftfahrzeugen enthalten normalerweise Reibelemente, wie z. B. eine Bremsbacke oder -platte auf einer Seite (normalerweise ein statisches Element) und eine Bremsscheibe, Bremstrommel oder ein anderes (normalerweise rotierendes) Element. Auf der Kontaktfläche dieser Reibelemente der Bremse wird in der Regel ein Reibbelag aufgebracht.

Die beiden Teile des Bremssystems werden entweder mechanisch bzw. durch eine pneumatische, hydraulische oder elektromagnetische Wirkung zusammengedrückt, um die gewünschte Bremswirkung zu erzielen. Beim Bremsen entsteht eine beträchtliche Wärmemenge, und die beiden Teile des Bremssystems reiben stark aneinander. Intensives Reiben und hohe Temperaturen führen zu Emissionen von Staubpartikeln (Staub), die etwa zu gleichen Teilen aus Staub des Bremsbelags und aus Abrieb der Reibfläche des rotierenden Teils der Bremse, z. B. der Bremsscheibe oder Bremstrommel, bestehen.

Bei den gegenwärtig hergestellten Kraftfahrzeugen werden oft keine Vorrichtungen eingesetzt, die den so entstehenden Staub auffangen oder anderweitig beseitigen. Es wurde festgestellt, dass diese Staubpartikel aufgrund ihrer Größe im Bereich von Nanometern bis Mikrometern als äußerst schädlich für den menschlichen Körper sind, wobei sie vor allem die Atemwege beeinträchtigen und möglicherweise weitere schädliche Wirkungen hervorrufen. Ihre Schädlichkeit wird noch dadurch verstärkt, dass in dicht besiedelten städtischen Gebieten sowohl die höchste Verkehrsdichte als auch das häufigste Abbremsen von Kraftfahrzeugen stattfindet, so dass sich die Befallszone in großen Ballungsräumen konzentriert.

Mit diesen negativen Auswirkungen auf die Gesundheit hängen häufig auch die gesetzlichen Anforderungen zusammen, mittels deren ein Druck auf die Verringerung der Staubemissionen ausgeübt wird. Eine der möglichen Maßnahmen ist die Zwangsabsaugung von Luft aus der Bremsenumgebung, zum Beispiel durch Absaugkammern in unmittelbarer Nähe der Bremse. Die Luft mit den Staubpartikeln wird dann z. B. mit einer elektrischen Vakuumpumpe abgesaugt und in den Rohrleitungen vor und nach der Vakuumpumpe werden Maßnahmen ergriffen, um die größtmögliche Menge an Staub aufzufangen. Bei diesen Maßnahmen handelt es sich in der Regel um Filter in verschiedenen Ausführungen. Ein Beispiel für eine solche Vorrichtung ist die im Dokument DE4240873 C2 beschriebene Lösung.

Bei der oben genannten Lösung werden Filter zum Auffangen von Bremsstaub eingesetzt. Aufgrund der geringen Partikelgröße von Bremsstaub sind diese Filter sperrig und komplex konstruiert, was ihre Herstellung teuer macht, und ihr Wirkungsgrad beim Auffangen von Bremsstaub ist gering.

### Zusammenfassung der Erfindung

Die Mängel der aus dem Stand der Technik bekannten Lösungen werden bis zu einem gewissen Grad durch die erfindungsgemäße Vorrichtung zum Absaugen von Bremsstaub beseitigt. Die Vorrichtung zum Absaugen von Bremsstaub umfasst einen Schlauch und einen Filter, wobei der Schlauch mit dem Filter verbunden ist, so dass die vom Schlauch mitgeführte, den Bremsstaub enthaltende Luft bei Betrieb der Vorrichtung von der Bremse zum Filter geleitet und dort gefiltert werden kann. Staubfreie Luft oder zumindest weniger Bremsstaub enthaltende Luft kann dann aus der Vorrichtung in die Atmosphäre entweichen. Der Schlauch hat ein erstes Ende mit einer Einlassöffnung zum Einlassen von Bremsstaub in den Schlauch und ein zweites Ende mit einer Auslassöffnung zum Auslassen von Bremsstaub in den Filter. Der Filter kann sich beispielsweise direkt hinter diesem Ende befinden oder der Schlauch kann z. B. in die Kammer eingeführt werden, an deren Ausgang sich der Filter befindet. Eine solche Kammer kann dann für mehrere Schläuche für mehrere Bremsen gemeinsam genutzt werden. Das Wesen der Erfindung besteht darin, dass der Schlauch mindestens ein magnetisches Element zum Auffangen ferromagnetischer Staubpartikel enthält. Dieses Element befindet sich auf der Oberfläche des Schlauchs, es ist entweder von innen oder von außen an der Schlauchwand befestigt, optional ist es abnehmbar. Es ist auch möglich, einige magnetische Elemente von innen und andere von außen zu befestigen. Das magnetische Element erzeugt in seiner Umgebung ein Magnetfeld, das das Auffangen von ferromagnetischem Bremsstaub im Inneren des Staubschlauchs ermöglicht. Vorzugsweise sind mehrere magnetische Elemente vorhanden. Vorzugsweise befinden sich die magnetischen Elemente an der Außenfläche des Schlauches, wo sie den Luftstrom nicht behindern. Magnetische Elemente können Permanentmagnete sein

Während der Absaugung (der Unterdruck für das Ansaugen der Luft durch den Schlauch zum Filter kann z. B. durch die Bewegung des Fahrzeugs, einen zusätzlichen Ventilator, die Saugung des Motors usw. erzeugt werden) wird ein Teil des Staubs bereits im Schlauch aufgefangen, so dass die Auffangkapazität der Vorrichtung im Vergleich zur Verwendung lediglich eines Standardschlauchs und Filters erhöht wird. Außerdem muss der Filter bei der vorliegenden Vorrichtung nicht so oft gewechselt werden, da weniger Staub zum Filter gelangt. Der Staub kann im Rahmen der Fahrzeugwartung aus dem Schlauch entfernt werden, bzw. kann der gesamte Schlauch ersetzt werden, wenn er mit Staub gesättigt ist.

Vorzugsweise umfasst der Schlauch eine Vielzahl von magnetischen Elementen, die in der Längsrichtung des Schlauches voneinander versetzt sind. Dies erhöht die Wirksamkeit des Auffangens von ferromagnetischem Bremsstaub.

Vorzugsweise sind die magnetischen Elemente ringförmig und befinden sich an der Außenfläche des Schlauchs, so dass ferromagnetischer Staub am gesamten Innenumfang des Schlauchs aufgefangen werden kann, ohne die Flexibilität des Schlauchs einzuschränken.

Vorzugsweise umfasst der Schlauch ferner an seiner Innenfläche mindestens eine Auffangrippe zum Auffangen von Staub, wobei die Auffangrippe in einer Richtung im schrägen Winkel zur Längsrichtung des Schlauchs ausgerichtet ist. Dadurch entsteht hinter (jeder) Rippe in Richtung des Luftstroms im Schlauch ein Nachlaufbereich, in dem ein Druckabfall und Staubablagerungen auftreten können.

Die Längsrichtung des Schlauchs, also die Richtung der Schlauchachse, ist die Richtung, in der die Luft durch den Schlauch zwischen der Bremse und dem Filter geleitet wird, wenn die Vorrichtung in Betrieb ist. Der Schlauch kann stark gekrümmt sein, so dass für jede Rippe diese Richtung im globalen Koordinatensystem unterschiedlich sein kann, und z. B. für jede einzelne Rippe oder einen Teil davon die Richtung der Tangente an die (im Allgemeinen gekrümmte) Achse des Schlauchs an dem Punkt, der der Rippe/dem Teil der Rippe am nächsten liegt, als diese Richtung angenommen wird. Der Schlauch ist vorzugsweise aus Metall, um den hohen Temperaturen der von den Bremsen abgesaugten Luft standzuhalten. Zum Beispiel kann die Einlassöffnung des Schlauchs bei der Montage in einer Öffnung im Bremsenschild eingeführt werden, so dass der Staub von der Bremse abgesaugt werden kann. Die Absaugung der Luft kann durch die Vorrichtung permanent während der Fahrt erfolgen oder sie kann z. B. durch ein Steuergerät ausgelöst werden, das bei jeder Betätigung der Bremsen den Ventilator für das Absaugen einschaltet.

Der Schlauch kann eine Vielzahl von Auffangrippen umfassen, die in Richtung der Schlauchlänge voneinander versetzt sind, wodurch die Wirksamkeit des Auffangens von Bremsstaub erhöht wird. Diese Rippen können dann z.B. über den gesamten Innenumfang des Schlauches verlaufen, also z. B. können sie die Form eines Kreisrings haben, sie können spiralförmig sein, usw.

Mindestens eine, vorzugsweise jede Auffangrippe kann aus einem Stück mit einem Schlauch bestehen. Dies ermöglicht eine einfache Herstellung und macht es überflüssig, die Auffangrippen am Schlauch zu befestigen, z. B. durch Kleben, Schweißen usw.

Der Schlauch kann ein Wellschlauch sein, wobei die mindestens eine Auffangrippe auf einem Teil der gewellten Innenfläche des Schlauchs angeordnet ist, der der Achse des Schlauchs am nächsten liegt. Die Rippe erstreckt sich dann über einen größeren Teil des Schlauchquerschnitts und kann so einen größeren Nachlauf hinter der Rippe bilden.

Vorzugsweise umfasst der Schlauch ferner mindestens ein poröses Element zum Auffangen von Staub, das an der Innenfläche des Schlauchs angeordnet ist. Das poröse Element weist beispielsweise mindestens eine poröse Oberfläche auf, die sich über die gesamte Länge des Schlauchs erstreckt, so dass der in der Luft mitgenommene Staub in den Poren um das Element herum aufgefangen werden kann. Das poröse Element besteht aus einem porenbildenden Material, in dessen Poren der Bremsstaub aufgefangen wird und so die Wirksamkeit des Auffangens von Bremsstaub erhöht wird. Vorzugsweise ist das poröse Element durch eine lösbare Verbindung mit dem Schlauch verbunden, so dass das poröse Element zur Wartung aus dem Schlauch herausgeschoben und gereinigt oder für ein neues Element ausgetauscht werden kann.

Vorzugsweise umfasst der Schlauch ferner mindestens eine Kühlrippe, die an einer Außenfläche des Schlauchs angeordnet ist. Durch die Reibung der Reibflächen der Bremse wird eine beträchtliche Menge an Wärme erzeugt, die die um die Bremse strömende Luft sowie den Bremsstaub und die Schläuche erwärmt. Die Kühlrippe dient zur Vergrößerung der Außenfläche des Schlauchs, wodurch die Wärmeabfuhr aus dem Schlauch verbessert wird. Dadurch kann die Haltbarkeit des Schlauchmaterials erhöht werden, somit kann dessen Verschleiß sowie die Abnutzung des Filters, eines eventuellen Ventilators usw. verringert werden. Diese Rippe oder Rippen kann/können dann im Wesentlichen jede beliebige Form haben, sie kann/können um den Umfang des Schlauchs herum, entlang der Achse des Schlauchs oder in jeder anderen Richtung verlaufen, usw.

Vorzugsweise umfasst der Schlauch eine Vielzahl von Kühlrippen, die entlang der Länge des Schlauchs angeordnet sind. Dadurch wird die äußere Oberfläche des Schlauchs weiter vergrößert und die Wärmeableitung aus dem Schlauch verbessert. Der Schlauch wird dann vorzugsweise auf das Kraftfahrzeug von unten am Fahrgestell angebracht, wo er durch die Luft während der Fahrt abgeblasen wird und dadurch effektiver gekühlt wird.

Der Schlauch kann daher außer Auffangrippen wahlweise noch einige oder alle der zusätzlichen Elemente - Auffangrippen, poröse Elemente und Kühlrippen - umfassen. Diese Elemente können auf demselben Längenabschnitt des Schlauchs kombiniert werden, d. h. die magnetischen Elemente können beispielsweise auf der Außenfläche zwischen den Kühlrippen angeordnet sein, während auf der Innenfläche die porösen Elemente zwischen den Auffangrippen angeordnet sind oder die Auffangrippen auf den porösen Elementen angeordnet sind usw. Es ist auch möglich, z. B. einen Schlauchabschnitt mit einem Elementtyp zu haben, gefolgt von einem Abschnitt mit einem anderen dieser vier Elementtypen usw. Darüber hinaus können diese Elemente auch zu gemeinsamen Elementen kombiniert werden, z. B. zu magnetischen Kühlrippen, magnetischen Auffangrippen, magnetischen porösen Elementen usw. In ähnlicher Weise können Elemente verwendet werden, die sowohl das oben genannte poröse Material als auch Auffangrippen durchführen.

Die Vorrichtung zum Absaugen von Bremsstaub umfasst beispielsweise auch einen Ventilator, der den Schlauch abbläst, um die Wärmeabfuhr aus dem Schlauch zu verbessern, oder der Schlauch befindet sich am Fahrgestell des Fahrzeugs, wo die Wärmeabfuhr durch Abblasen des Luftstroms verbessert wird und im Vergleich zu einem Ventilator energieeffizienter ist.

Die Mängel der aus dem Stand der Technik bekannten Lösungen werden bis zu einem gewissen Grad auch durch das Kraftfahrzeug beseitigt, das eine Karosserie mit Fahrgestell, Rädern und Bremsen umfasst. Dieses Kraftfahrzeug umfasst die Vorrichtung zum Absaugen von Bremsstaub, wobeidie Einlassöffnung des Schlauches auf ein Reibelement einer Bremse gerichtet ist. Zusätzlich zu den aufgelisteten mit dem Bremsstaub zusammenhängenden Komponenten umfasst dieses Kraftfahrzeug alle anderen Standardkomponenten wie Glas, Motor, Sitze, Beleuchtungs- und Steuerelektronik usw. Der Schlauch kann dann einen Teil der Bremse mit dem Filter oder der Filterkammer verbinden.

Vorzugsweise umfasst die Vorrichtung zum Absaugen von Bremsstaub eine Vielzahl von Schläuchen, wobei jeder mit der Einlassöffnung auf ein Reibelement einer anderen Bremse gerichtet ist und die Schläuche zu einem gemeinsamen Filter zugeführt werden. Jeder von den Bremsen des Kraftfahrzeugs kann dann ein eigener Schlauch angehören und diese Schläuche werden in eine gemeinsame Kammer eingeführt, an deren Auslass sich der angegebene Filter befindet. Vier Schläuche werden also standardmäßig vorhanden sein. Dadurch werden die Produktionskosten der Vorrichtung zum Absaugen von Bremsstaub gesenkt und die Wartung vereinfacht.

Die Vorrichtung zum Absaugen von Bremsstaub umfasst vorzugsweise eine Absaugkammer. Die Absaugkammer befindet sich an der Bremse und ist an die Einlassöffnung des Schlauchs angeschlossen. Die Absaugkammer umschließt die Reibflächen der Bremse, wodurch der Bremsstaub besser abgesaugt werden kann und die Gefahr des Austretens von Bremsstaub in die Umgebung verringert wird. Im Wesentlichen handelt es sich bei der Absaugkammer also um eine Schlauchtülle, die es ermöglicht, Luft mit Staub von einem größeren Teil der Reibfläche der Bremse anzusaugen, als es die Einlassöffnung des Schlauchs allein erlaubt.

Vorzugsweise umfasst die Vorrichtung zum Absaugen von Bremsstaub auch eine Unterdruckquelle, um eine ausreichende Saugleistung für die Absaugung des Bremsstaubs zu gewährleisten. Die Unterdruckquelle kann eine Vakuumpumpe oder ein Ventilator sein, das sich vor oder hinter dem Filter befindet. Vorzugsweise wird das Ansaugen des Motors als Unterdruckquelle genutzt, wodurch die Energieeffizienz der gesamten Vorrichtung zum Absaugen von Bremsstaub erhöht wird.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
- Fig. 1: eine schematische Darstellung der Vorrichtung zum Absaugen von Bremsstaub,
- Fig. 2: eine schematische Darstellung des Kraftfahrzeugs mit der Vorrichtung zum Absaugen von Bremsstaub,
- Fig. 3: eine schematische Darstellung des Querschnitts des Schlauchs in dem Teil, der die magnetischen Elemente umfasst,
- Fig. 4: eine schematische Darstellung des Querschnitts des Schlauchs in dem Teil, der die Auffangrippen umfasst,
- Fig. 5: eine schematische Darstellung des Querschnitts des Schlauchs in dem Teil, der das poröse Element umfasst,
- Fig. 6: eine schematische Darstellung des Querschnitts des Schlauchs in dem Teil, der die Kühlrippen umfasst,
- Fig. 7: eine schematische Darstellung eines Querschnitts des Schlauchs in dem Teil, der die Auffangrippen, Kühlrippen, magnetischen Elemente und das poröse Element umfasst.

### Ausführungsbeispiele der Erfindung

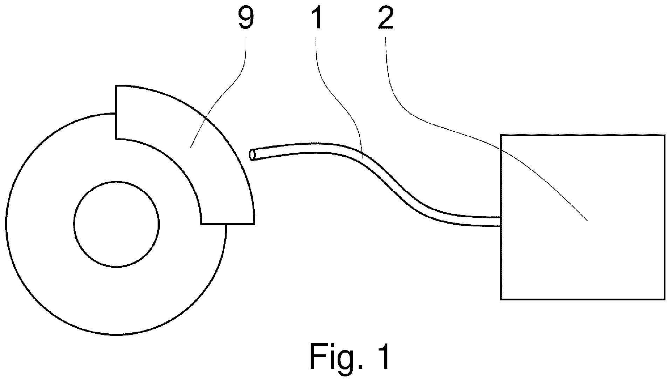

Die vorliegende Ausführung veranschaulicht beispielhafte Ausführungsvarianten der Erfindung, die jedoch keine einschränkende Wirkung im Hinblick auf den Schutzumfang hat. Ein Beispiel für die vorliegende Lösung ist die in der Fig. 1 dargestellte Vorrichtung zum Absaugen von Bremsstaub. Die Vorrichtung zum Absaugen von Bremsstaub umfasst mindestens einen Schlauch 1 und einen Filter 2.

Ein Beispiel für die vorliegende Lösung ist die in der Fig. 1 dargestellte Vorrichtung zum Absaugen von Bremsstaub. Die Vorrichtung zum Absaugen von Bremsstaub umfasst einen Schlauch 1 und einen Filter 2.

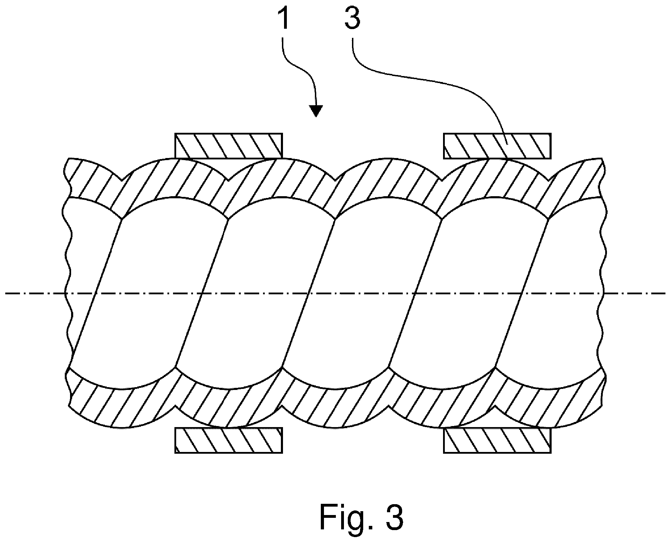

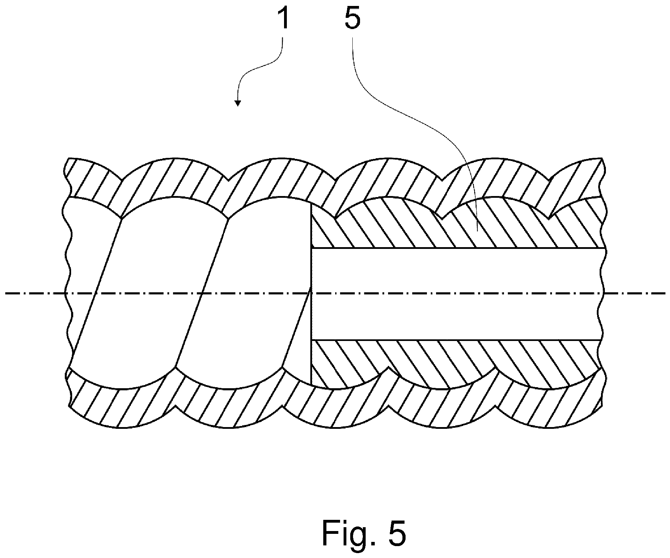

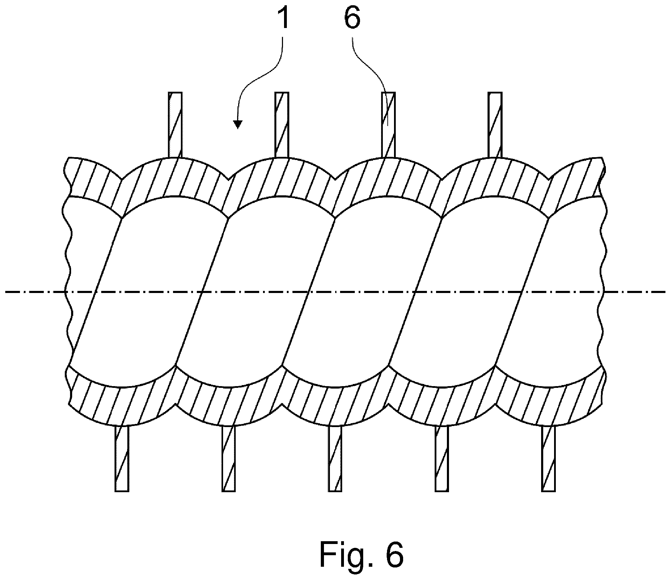

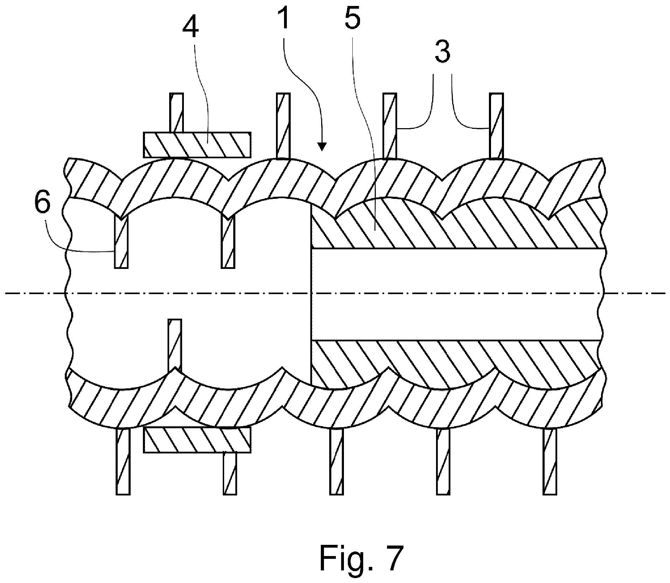

Der Schlauch 1 wird nach dem Einbau der Vorrichtung am Fahrgestell des Fahrzeugs befestigt. Die Einlassöffnung des Schlauchs 1 ist auf das Reibelement der Bremse 9 gerichtet und über die Auslassöffnung ist der Schlauch 1 an den Filter 2 angeschlossen. Der Schlauch 1 umfasst in der gezeigten Ausführung magnetische Elemente 3, Auffangrippen 4 und Kühlrippen 6. Alle Elemente sind über die gesamte Länge des Schlauchs 1 miteinander kombiniert. Der Schlauch 1 umfasst ferner ein poröses Element 5, das innerhalb des Schlauchs 1 näher an der Auslassöffnung angeordnet ist. Diese Elemente sind in den Fig. 3 bis 6 einzeln und in der Fig. 7 in Kombination dargestellt.

In der gezeigten Ausführung haben die magnetischen Elemente 3 zum Auffangen von ferromagnetischem Staub die Form von Ringen aus permanentem magnetischem Material, die mit der Außenfläche des Schlauchs 1 verklebt sind. Die Ringe sind über die Länge des Schlauchs 1 voneinander versetzt, wobei 25 magnetische Elemente 3 pro 1 m Schlauch 3 angeordnet sind.

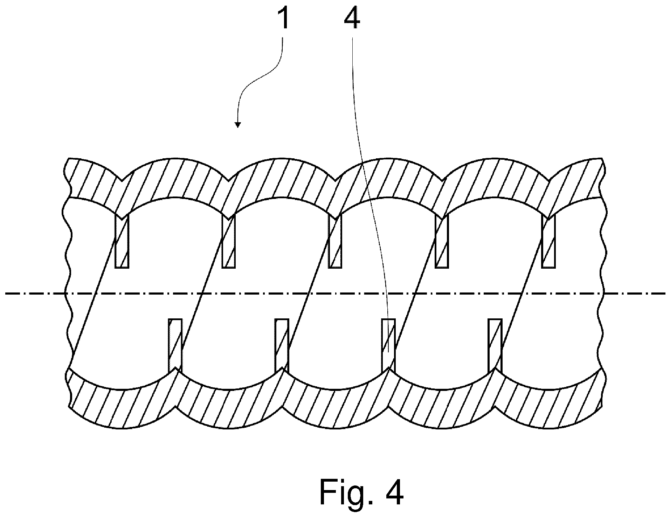

Die Auffangrippen 4 befinden sich auf der Innenfläche des Schlauches 1. In der gezeigten Ausführung haben die Auffangrippen 4 die Form einer Wendel, wie aus dem Schnitt in der Fig. 4 ersichtlich, einzelnen Windungen der Wendel in Längsrichtung des Schlauches 1 voneinander versetzt sind, wobei auf 1 m Schlauch 1 20 bis 60 Windungen vorgesehen sind, in der gezeigten Ausführung gibt es 30/m. In Abschnitten, in denen anstelle der Auffangrippen 4 andere Elemente vorhanden sind, wird diese Wendel unterbrochen, so dass der Schlauch 1 eine Vielzahl dieser spiralförmigen Rippen aufweist. Die Auffangrippen 4 erstrecken sich hier also durch den gesamten Innenumfang des Schlauches 1, sind senkrecht zur Innenfläche des Schlauches 1 und ihre Höhe entspricht einem Viertel des Durchmessers des Schlauches 1. Der Schlauch 1 und Auffangrippen 4 sind aus einem Stück.

Um eine möglichst effektive Bildung von Nachläufen hinter den Auffangrippen 4 zu erreichen und damit den Staub im Schlauch 1 bestmöglich aufzufangen, werden die Auffangrippen 4 in der gezeigten Ausführung in einer durch eine Ebene, die die Achse des Schlauches 1 umfasst, geführten Schnittansicht senkrecht zur Achse des Schlauches 1 und der Innenwand des Schlauches 1 geführt, wobei sie eine konstante Dicke aufweisen. Die hintere Seite der Rippen, d. h. die dem Filter 2 zugewandte Seite, ist besonders wichtig für die Bildung des Nachlaufs.

Das poröse Element 5 hat die Form eines Hohlzylinders, der durch die Auslassöffnung in den Schlauch 1 eingeführt wird. Der Zylinder ist aus Eisenschaum mit einer Porosität von 60 bis 98 % hergestellt, in der gezeigten Ausführung mit einer Porosität von 74 %. Durch die Poren wird der Bremsstaub an der Oberfläche des porösen Elements 5 aufgefangen. Das poröse Element 5 ist durch eine auseinandernehmbare Verschraubung zum Schlauch 1 befestigt. Bei der Wartung der Vorrichtung zum Absaugen von Bremsstaub kann dann das poröse Element 5 aus dem Schlauch 1 herausgeschoben und gereinigt bzw. durch ein neues Element ersetzt werden.

Die Kühlrippen 6 zur Wärmeableitung weisen die Form einer Wendel auf und befinden sich an der Außenfläche des Schlauches 1. Die Kühlrippen 6 sind aus einem Material mit hoher Wärmeleitfähigkeit hergestellt, insbesondere Metall, in dem gezeigten Beispiel aus Aluminium, wodurch eine bessere Wärmeableitung erreicht wird. Vorzugsweise ist der Schlauch 1 bei der Kraftfahrzeugmontage am Fahrgestell 7 des Kraftfahrzeugs befestigt, wo die Kühlrippen 6 während der Fahrt durch die strömende Luft gekühlt werden.

Der Filter 2 umfasst eine Filterschicht und ist an die Auslassöffnung des Schlauchs 1 angeschlossen. Indem die Luft durch die Filterschicht geleitet wird, wird der nicht im Schlauch 1 aufgefangene Staub aufgefangen. Die Filterschicht besteht aus Filtergewebe.

Eine Ausführung der Erfindung ist auch ein Kraftfahrzeug, das mit einer Vorrichtung zum Absaugen von Bremsstaub mit einem Schlauch 1 mit magnetischen Elementen 3 ausgerüstet ist. Das Kraftfahrzeug umfasst eine Karosserie mit Fahrgestell 7, Räder 8, Bremsen 9 und die Vorrichtung zum Absaugen von Bremsstaub, die so angeordnet ist, dass der Bremsstaub in die Schläuche 1, insbesondere in die mehreren Schläuche 1, angesaugt wird, dieser Bremsstaub teilweise in den Schläuchen 1 und teilweise im Filter 2 aufgefangen wird und dann nach außen abgeleitet wird.

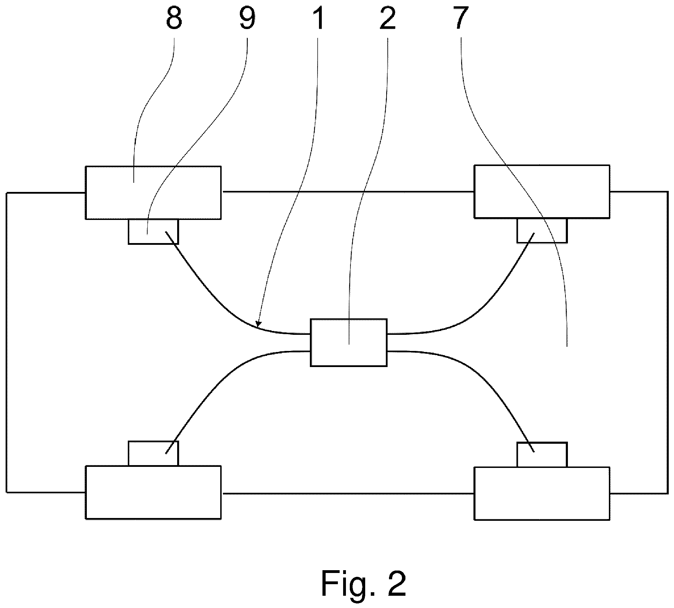

Das Kraftfahrzeug in der dargestellten Ausführung, siehe die Ansicht des Fahrgestells 7 von Fig. 2, umfasst vier Staubschläuche 1, wobei die Einlassöffnung jedes Schlauchs 1 auf die Reibflächen einer Bremse 9 gerichtet ist. Alle Schläuche 1 sind an einen Filter 2 angeschlossen.

In anderen alternativen Ausführungen können die magnetischen Elemente 3, die Auffangrippen 1, die porösen Elemente 5 und die Kühlrippen 6 in beliebiger Kombination oder getrennt auf verschiedenen Teilen der Länge des Schlauchs 1 angeordnet sein, d. h. der Schlauch 1 kann einen Abschnitt mit magnetischen Elementen 3, anschließend einen Abschnitt mit Auffangrippen 4, anschließend mit porösen Elementen 5 und anschließend mit Kühlrippen 6 aufweisen.

In anderen alternativen Ausführungen können die Anzahl, die Form, die Befestigungsmethode und die Position der magnetischen Elemente 3 beliebig gewählt werden. Sie können z. B. mit dem Schlauch verlötet, verschweißt usw. sein, sie können aber auch aus einem Stück mit dem Schlauch bestehen, oder die magnetischen Elemente 3 können auch die Auffangrippen 4 aus magnetischem Material, poröse Elemente 5, Kühlrippen 6 usw. sein, d.h. die magnetischen Elemente 3 können sich also in alternativen Ausführungen auch im Inneren des Schlauchs 1 befinden.

In anderen alternativen Ausführungen ist die Anzahl der Auffangrippen 4 beliebig, in einigen Ausführungen umfasst der Schlauch 1 mindestens eine Auffangrippe 1, aber es gibt auch Ausführungen, bei denen die Auffangrippen 4 überhaupt nicht am Schlauch 1 vorhanden sind. Die Auffangrippen 4 können in einem beliebigen Winkel zur Innenfläche des Schlauchs 1 stehen. Die Form der Auffangrippen 4 kann z. B. scheibenförmig, halbkreisförmig usw. sein. Die optimale Form, die Abmessungen, die Anzahl und die Positionierung der Auffangrippen 4 für die bestmögliche Bildung des Nachlaufs und das Auffangen des Bremsstaubs können durch Versuche oder Computersimulationen usw. ermittelt werden. Die Auffangrippen 4 können separate Teile sein, die aus einem anderen Material als der Schlauch 1 bestehen und z. B. durch Kleben, Löten usw. am Schlauch 1 befestigt werden.

In anderen alternativen Ausführungen kann die Rückseite der Auffangrippe 4 einen beliebigen Winkel mit der Achse des Schlauchs 1 an einer bestimmten Stelle einschließen, vorzugsweise mindestens 45°, noch bevorzugter mindestens 75°. Die Rückseite muss im Allgemeinen nicht eben sein, und ihr Winkel für das obige Kriterium kann z. B. als durchschnittlicher Winkel über die gesamte Höhe der jeweiligen Auffangrippe 1, als Winkel auf halber Höhe der Rippe usw. vorgesehen werden.

In anderen alternativen Ausführungen kann der Schlauch 1 eine beliebige Anzahl von porösen Elementen 5 umfassen. Das poröse Element 5 kann eine beliebige Form haben. Die Auffangrippen 4 können zum Beispiel aus einem porösen Material bestehen. In einigen Ausführungen kann das poröse Element 5 lediglich in den Schlauch 1 eingesetzt oder durch eine andere lösbare Verbindung, aber auch durch eine nicht lösbare Verbindung, wie z. B. Kleben, mit dem Schlauch 1 verbunden sein. Der gesamte Schlauch 1 wird dann bei der Wartung ausgetauscht.

In anderen alternativen Ausführungen kann die Anzahl der Kühlrippen 6 beliebig gewählt werden. Die Form der Kühlrippen 6 kann z. B. scheibenförmig sein oder die Kühlrippen 6 können in Form von Streifen entlang der Länge des Schlauchs 1 angeordnet sein, usw. Die Vorrichtung zum Absaugen von Bremsstaub kann auch einen Ventilator umfassen, der einen Luftstrom um den Schlauch 1 erzeugt, um die Wärmeabfuhr zu verbessern.

In anderen alternativen Ausführungen kann die Filterschicht im Filter 2 z. B. aus einer Granulatschicht, einem porösen Material usw. bestehen. Der Filter 2 kann auch mehrere verschiedene Filterschichten umfassen.

In anderen alternativen Ausführungen kann die Vorrichtung zum Absaugen von Bremsstaub eine Absaugkammer umfassen, die sich nach der Montage der Vorrichtung an der Bremse 9 befindet. Die Absaugkammer umgibt die Reibflächen der Bremse 9 oder befindet sich in unmittelbarer Nähe der Bremse 9 und ist mit der Einlassöffnung des Schlauchs 1 verbunden, wodurch die Fähigkeit der Vorrichtung, Staub anzusaugen, verbessert und die Gefahr des Entweichens von Staub in die Umgebung verringert wird. Eine alternative Ausführung der Vorrichtung umfasst eine Vakuumquelle. Die Unterdruckquelle kann z. B. eine Vakuumpumpe, ein Ventilator oder eine Saugung des Motors usw. sein. Die Unterdruckquelle kann sich zwischen dem Staubschlauch 1 und dem Filter 2 oder nach dem Filter 2 befinden usw.

In anderen alternativen Ausführungen kann das Fahrzeug eine beliebige Anzahl von Schläuchen 1 und Filtern 2 umfassen, so dass z. B. jeder Schlauch 1 mit seinem eigenen Filter 2 verbunden ist usw.

### Bezugszeichenliste

- 1 -: Schlauch
- 2 -: Filter
- 3 -: Magnetisches Element
- 4 -: Auffangrippe
- 5 -: Poröses Element
- 6 -: Kühlrippe
- 7 -: Fahrgestell
- 8 -: Rad
- 9 -: Bremse

## Patentansprüche

1. Vorrichtung zum Absaugen von Bremsstaub von Bremsen eines Kraftfahrzeugs, wobei die Vorrichtung einen Schlauch (1) und einen Filter (2) umfasst, wobei der Schlauch (1) mit dem Filter (2) verbunden ist und ein erstes Ende mit einer Einlassöffnung zum Einlassen von Bremsstaub in den Schlauch (1) und ein zweites Ende mit einer Auslassöffnung zum Auslassen von Bremsstaub in den Filter (2) aufweist, **dadurch gekennzeichnet, dass** der Schlauch (1) mindestens ein magnetisches Element (3) umfasst, das an einer Oberfläche des Schlauchs (1) zum Auffangen von ferromagnetischen Staubpartikeln angeordnet ist.

2. Vorrichtung nach Anspruch 1, **dadurch gekennzeichnet, dass** sie eine Vielzahl von in Längsrichtung des Schlauches (1) voneinander versetzten magnetischen Elementen (3) umfasst.

3. Vorrichtung nach einem der vorhergehenden Ansprüche, **dadurch gekennzeichnet, dass** das mindestens ein magnetisches Element (3) die Form eines Ringes hat, der auf der Außenfläche des Schlauches (1) angeordnet ist.

4. Vorrichtung nach einem der vorhergehenden Ansprüche, **dadurch gekennzeichnet, dass** der Schlauch (1) an seiner Innenfläche mindestens eine Auffangrippe (4) zum Auffangen von Staub umfasst, wobei die Auffangrippe (4) in einer Richtung im schrägen Winkel zur Längsrichtung des Schlauchs (1) ausgerichtet ist.

5. Vorrichtung nach einem der vorhergehenden Ansprüche, **dadurch gekennzeichnet, dass** der Schlauch (1) ferner mindestens ein poröses Element (5) zum Auffangen von Staub umfasst, das an der Innenfläche des Schlauchs (1) angeordnet ist.

6. Vorrichtung nach einem der vorhergehenden Ansprüche, **dadurch gekennzeichnet, dass** der Schlauch (1) ferner mindestens eine Kühlrippe (6) umfasst, die an der Außenfläche des Schlauchs (1) angeordnet ist.

7. Kraftfahrzeug umfassend eine Karosserie mit einem Fahrgestell (7), Räder (8) und Bremsen (9) zum Abbremsen der Räder (8), **dadurch gekennzeichnet, dass** es ferner die Vorrichtung zum Absaugen von Bremsstaub nach einem der vorhergehenden Ansprüche umfasst, wobei die Einlassöffnung des Schlauchs (1) zum Reibelement einer der Bremsen (9) ausgerichtet ist.

8. Kraftfahrzeug nach Anspruch 7, **dadurch gekennzeichnet, dass** die Vorrichtung zum Absaugen von Bremsstaub eine Vielzahl von Schläuchen (1) umfasst, wobei jeder Schlauch (1) mit der Einlassöffnung zu einem Reibelement einer anderen Bremse (9) ausgerichtet ist und die Schläuche (1) zu einem gemeinsamen Filter (2) geleitet werden.
